# EUROPEAN PATENT APPLICATION

(11) **EP 4 436 005 A1**
(43) Date of publication of application: **25.09.2024**
(21) Application number: 22906199.9
(22) Date of filing: 23.11.2022
(51) Int. Cl.: H02J 50/00, H02J 50/80

(54) **NFC WIRELESS CHARGING METHOD AND SYSTEM, AND ELECTRONIC DEVICE AND READABLE STORAGE MEDIUM**

(30) Priority: 17.12.2021 CN 202111553231
(71) Applicant: ZTE Corporation, Shenzhen, Guangdong 518057 (CN)
(72) Inventor: XU, Min, Shenzhen, Guangdong 518057 (CN)
(74) Representative: Osterhoff, Utz
(86) International application number: PCT/CN2022/133805
(87) International publication number: WO 2023/109447

(57) **Abstract**

The embodiments of the present disclosure relate to the technical field of near field communication, and disclose an NFC wireless charging method, an NFC wireless charging system, an electronic device and a readable storage medium. The NFC wireless charging method includes: receiving an NFC wireless charging request sent by a device to be charged in response to that the power supply device establishes an NFC connection with the device to be charged; performing authentication on the device to be charged, and obtaining an authentication result; and in response to that the authentication result is authentication passed, electric quantity of the power supply device is converted into electric quantity of the device to be charged, so as to charge the device to be charged, thereby improving the security and privacy of NFC wireless charging.

## Description

### CROSS-REFERENCE TO RELATED APPLICATIONS

The present disclosure claims priority to Chinese patent application CN202111553231.1, filed on December 17, 2021, and entitled "NFC WIRELESS CHARGING METHOD, NFC WIRELESS CHARGING SYSTEM, ELECTRONIC DEVICE AND READABLE STORAGE MEDIUM", the entire contents of which are incorporated herein by reference.

### TECHNICAL FIELD

The embodiments of the present disclosure relate to the technical field of near field communication, and in particular to an NFC wireless charging method, an NFC wireless charging system, an electronic device and a readable storage medium.

### BACKGROUND

Near Field Communication (NFC for short) is developed based on contactless the Radio Frequency Identification (RFID) technology and combined with wireless interconnection technology. Devices using NFC technology can communicate over short distances, with an operating frequency of 13.56 MHz and transmission rates of 106 kbit/s, 212 kbit/s, 424 kbit/s and 848 kbit/s.

The NFC Forum, the official organization for the NFC standard, announced on May 6, 2020 that the new Wireless Charging Specification (WLC for short) has been approved. WLC is NFC-based wireless charging. However, the current NFC wireless charging technology may have security risks.

### SUMMARY

The main purpose of the embodiments of the present disclosure is to provide an NFC wireless charging method, an NFC wireless charging system, an electronic device and a readable storage medium, so that the security and privacy of NFC wireless charging can be improved.

To achieve at least the above purposes, embodiments of the present disclosure provide an NFC wireless charging method, applied to a power supply device or an authentication device communicating with the power supply device, including: receiving an NFC wireless charging request sent by a device to be charged in response to that the power supply device establishes an NFC connection with the device to be charged; performing authentication on the device to be charged, and obtaining an authentication result; and in response to that the authentication result is authentication passed, converting electric quantity of the power supply device into electric quantity of the device to be charged, so as to charge the device to be charged.

To achieve the above purposes, embodiments of the present disclosure further provide an NFC wireless charging method, applied to a device to be charged, including: sending an NFC wireless charging request to a power supply device or an authentication device communicating with the power supply device in response to that the device to be charged and the power supply device establish an NFC connection for the power supply device or the authentication device communicating with the power supply device to perform authentication on the device to be charged, and obtaining an authentication result; and in response to that the authentication result is authentication passed, receiving electric quantity converted by the power supply device; where the power supply device converts electric quantity of the power supply device into electric quantity of the device to be charged, so as to charge the device to be charged.

To achieve the above purposes, embodiments of the present disclosure further provide an NFC wireless charging system, including: a power supply device and a device to be charged; the device to be charged is configured for sending an NFC wireless charging request to the power supply device in response to establishing an NFC connection with the power supply device; and the power supply device is configured for performing authentication on the device to be charged in response to receiving the NFC wireless charging request, and obtaining an authentication result; in response to that the authentication result is authentication passed, converting electric quantity of the power supply device into electric quantity of the device to be charged, so as to charge the device to be charged.

To achieve the above purposes, embodiments of the present disclosure further provide an NFC wireless charging system, including: a power supply device, a device to be charged, and an authentication device communicating with the power supply device; the device to be charged is configured for sending an NFC wireless charging request to the authentication device in response to establishing an NFC connection with the power supply device; and the authentication device is configured for performing authentication on the device to be charged in response to receiving the NFC wireless charging request, and obtaining an authentication result; in response to that the authentication result is authentication passed, converting electric quantity of the power supply device into electric quantity of the device to be charged, so as to charge the device to be charged.

To achieve the above purposes, embodiments of the present disclosure further provide an electronic device, including: at least one processor, and a memory communicated with the at least one processor, the memory is configured to store an instruction executable by the at least one processor, and the instruction is executed by the at least one processor; in response to that the electronic device is an authentication device, the at least one processor executes the above-mentioned NFC wireless charging method applied to the power supply device or the authentication device communicating with the power supply device; and in response to that the electronic device is a device to be charged, the at least one processor executes the above-mentioned NFC wireless charging method applied to the power supply device.

To achieve the above purposes, embodiments of the present disclosure further provide a computer-readable storage medium storing a computer program, and when the computer program is executed by a processor, the above-mentioned NFC wireless charging method is implemented.

### BRIEF DESCRIPTION OF THE DRAWINGS

FIG. 1 is a flow chart of an NFC wireless charging method applied to a power supply device or an authentication device communicating with the power supply device according to an embodiment of the present disclosure.
FIG. 2 is a flow chart of an implementation manner of step 102 according to an embodiment of the present disclosure.
FIG. 3 is a schematic view of a display interface of a power supply device for performing trust settings on a device to be charged according to an embodiment of the present disclosure.
FIG. 4 is a schematic view of a display interface of a power consumption and a charging quantity according to an embodiment of the present disclosure.
FIG. 5 is a module schematic view of a power supply device according to an embodiment of the present disclosure.
FIG. 6 is a schematic flow chart of an NFC wireless charging method according to an embodiment of the present disclosure.
FIG. 7 is a schematic flow chart of another NFC wireless charging method according to an embodiment of the present disclosure.
FIG. 8 is a schematic flow chart of yet another NFC wireless charging method according to an embodiment of the present disclosure.
FIG. 9 is a flow chart of an NFC wireless charging method applied to a device to be charged according to an embodiment of the present disclosure.
FIG. 10 is a schematic view of an NFC wireless charging system according to an embodiment of the present disclosure.
FIG. 11 is another schematic view of an NFC wireless charging system according to an embodiment of the present disclosure.
FIG. 12 is a schematic structural view of an electronic device according to an embodiment of the present disclosure.

### DETAILED DESCRIPTION OF THE EMBODIMENTS

In order to make the purpose, technical solutions and advantages of the embodiments of the present disclosure clearer, each embodiment of the present disclosure will be described in detail below with reference to the accompanying drawings. However, those skilled in the art can understand that in each embodiment of the present disclosure, many technical details are provided to enable readers to better understand the present disclosure. However, even without these technical details and various changes and modifications based on the following embodiments, the technical solution claimed in the present disclosure can also be implemented. The division of the following embodiments is for the convenience of description and should not constitute any limitation on the specific implementation of the present disclosure. The various embodiments can be combined with each other and referenced with each other on the premise that there is no contradiction.

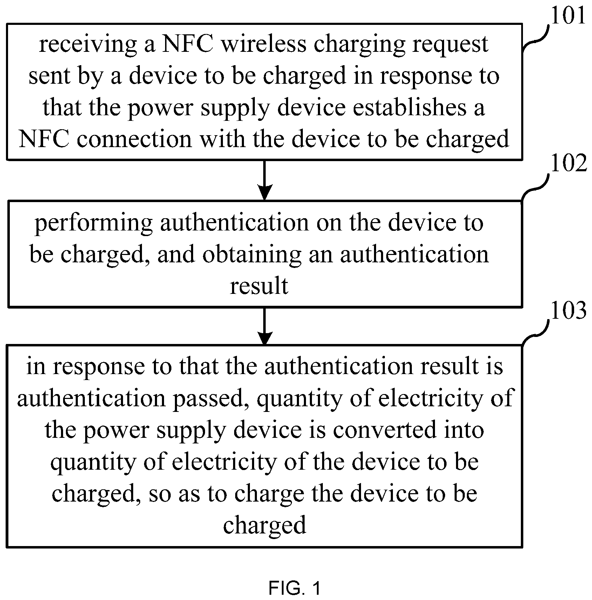

An embodiment of the present disclosure relates to an NFC wireless charging method, which is applied to a power supply device or an authentication device communicating with a power supply device. The authentication device can be a server. Both the power supply device and the device to be charged are a device with NFC function. The power supply device can be, for example, a smartphone, a tablet, etc. The device to be charged can be, for example, a smart watch, wireless headset, smart bracelet, etc. The application scenario of this embodiment is: the power supply device performs NFC wireless charging on the device to be charged. After the power supply device or the authentication device communicating with the power supply device passes the authentication of the device to be charged, electric quantity of the power supply device is converted into electric quantity of the device to be charged. The principle is to utilize the antenna to form a magnetic field to generate electric energy in the device to be charged. In this embodiment, the flow chart of the NFC wireless charging method can be referred to FIG. 1, including:
Step 101: receiving an NFC wireless charging request sent by a device to be charged after the power supply device establishes an NFC connection with the device to be charged.
Step 102: performing authentication on the device to be charged, and obtaining an authentication result.
Step 103: in response to that the authentication result is authentication passed, converting electric quantity of the power supply device into electric quantity of the device to be charged, so as to charge the device to be charged.

In this embodiment, before the power supply device starts charging the device to be charged, the power supply device or the authentication device communicating with the power supply device has authenticated the device to be charged. In the situation that the authentication passes, the power supply device begins to convert its own electric quantity into the electric quantity of the device to be charged, so as to charge the device to be charged. By adding the authentication process, it is conducive to improving the security and privacy of NFC wireless charging.

The implementation details of the NFC wireless charging method of this embodiment are described in detail below. The following content is only implementation details provided for convenience of understanding and is not necessary for implementation of this solution.

At step 101, after the power supply device and the device to be charged establish an NFC connection, if the device to be charged determines that the current electric quantity is lower than a preset threshold value of the electric quantity, then the device to be charged can send the NFC wireless charging request to the power supply device or the authentication device communicating with the power supply device. The threshold value of the electric quantity can be set according to actual needs, which aims to indicate that the current electric quantity of the device to be charged is a low electric quantity and needs to be charged. The NFC wireless charging request can be Wireless Charging Capability information (WLC_CAP for short). WLC_CAP is provided by the device to be charged after the NFC connection is established, which means that the device to be charged has the NFC wireless charging receiving capability, and the authentication process can be carried out thereafter. The device to be charged can be understood as the Wireless Charging Listener device (WLC-L for short). WLC_CAP is provided by WLC-L to prove that the WLC-L has NFC wireless charging receiving capability.

At step 102, the power supply device or the authentication device communicating with the power supply device performs authentication on the device to be charged, and obtains the authentication result. The performing authentication on the device to be charged can be understood as: determining whether the device to be charged is a trusted device, and ensuring that the power supply behavior is performed under conditions approved by the user. For example, the power supply device or the authentication device communicating with the power supply device can pre-set trust settings for its trusted device, and the power supply device can pre-store its trusted device. Therefore, when performing authentication on the device to be charged, determining whether the device to be charged is its pre-stored trusted device. If the device to be charged is its pre-stored trusted device, the authentication result is determined to be authentication passed. Otherwise, the authentication result is determined to be authentication failed.

At step 103, when the authentication result is authentication passed, the power supply device starts to perform NFC wireless charging on the device to be charged, convert the electric quantity of the power supply device into the electric quantity of the device to be charged, so as to charge the device to be charged. When the NFC wireless charging method is applied to the power supply device, when the power supply device determines that the authentication passed, it can directly convert its own electric quantity into the electric quantity of the device to be charged, so as to charge the device to be charged. When the NFC wireless charging method is applied to the authentication device, when the authentication device determines that the authentication passed, it can send a charging instruction to the power supply device to instruct the power supply device to convert its own electric quantity into the electric quantity of the device to be charged, so as to charge the device to be charged.

In the situation that the authentication fails, it means that the device to be charged is not a device trusted by the power supply device, the power supply device can prohibit NFC wireless charging of the device to be charged to ensure the security and privacy of NFC wireless charging.

In an embodiment, the authentication device is a server. When the device to be charged detects that the current electric quantity is lower than the preset electric quantity, it can initiate an NFC wireless charging request to the server. After receiving the NFC wireless charging request, the server performs authentication on the device to be charged, and after the authentication passes, sends a charging instruction to the power supply device that establishes an NFC connection with the device to be charged, so that the power supply device converts its own electric quantity into the electric quantity of the device to be charged, so as to charge the device to be charged.

In an embodiment, at step 102, the implementation of the performing authentication on the device to be charged, and obtaining the authentication result may include: sending target information to the device to be charged for the device to be charged to encrypt the target information to generate verification information; receiving the verification information replied by the device to be charged, and decrypting the verification information, and obtaining decrypted data; and performing authentication on the device to be charged according to the decrypted data, and obtaining the authentication result. If the decrypted data is the same as the target information, it can be determined that the authentication passed; otherwise, it is considered that the authentication fails. The target information can be a preset character string or a generated random number. In this embodiment, the method of encrypting the target information may be symmetric encryption or asymmetric encryption. However, this embodiment does not specifically limit the specific content of the target information and the encryption method.

In an embodiment, the sending the target information to the device to be charged for the device to be charged to encrypt the target information to generate the verification information includes: sending the target information to the device to be charged for the device to be charged to utilize a secret key to encrypt the target information to generate the verification information. The decrypting the verification information, and obtaining the decrypted data includes: decrypting the verification information according to the secret key, and obtaining the decrypted data.

In an embodiment, the sending the target information to the device to be charged for the device to be charged to utilize the secret key to encrypt the target information to generate the verification information includes: sending the target information to the device to be charged for the device to be charged to utilize the secret key and a number of charging times to encrypt the target information to generate the verification information. The number of charging times is a number of charging times that the device to be charged is charged by the power supply device. The decrypting the verification information according to the secret key, and obtaining the decrypted data includes: obtaining a number of charging times for the device to be charged, decrypting the verification information according to the number of charging times and the secret key, and obtaining the decrypted data.

In an embodiment, the secret key includes a first secret key and a second secret key. The sending the target information to the device to be charged for the device to be charged to utilize the secret key and the number of charging times to encrypt the target information to generate the verification information includes: sending the target information to the device to be charged for the device to be charged to utilize the first secret key and an initial vector to encrypt the target information to generate the verification information. The initial vector is obtained by utilizing the second key to encrypt the number of charging times. The decrypting the verification information according to the number of charging times and the secret key, and obtaining the decrypted data includes: decrypting the verification information according to the number of charging times, the first secret key and the second secret key, and obtaining the decrypted data.

In an embodiment, at step 102, the implementation of the performing authentication on the device to be charged, and obtaining the authentication result includes: encrypting target information, and sending encrypted target information to the device to be charged for the device to be charged to decrypt the encrypted target information to generate decrypted data; receiving the decrypted data replied by the device to be charged; and performing authentication on the device to be charged according to the decrypted data, and obtaining the authentication result. If the decrypted data is the same as the target information, it can be determined that the authentication passed; otherwise, it is considered that the authentication fails. The target information can be a preset character string or a generated random number. In this embodiment, the method of encrypting the target information may be symmetric encryption or asymmetric encryption.

In an embodiment, the encrypting the target information includes: encrypting the target information according to a secret key. The device to be charged utilizes the secret key to decrypt the encrypted target information to generate the decrypted data.

In an embodiment, the encrypting the target information according to the secret key includes: encrypting the target information according to the secret key and a number of charging times for the device to be charged. The device to be charged utilizes the secret key and the number of charging times to decrypt the encrypted target information to generate the decrypted data.

In an embodiment, the secret key includes a first secret key and a second secret key. The encrypting the target information according to the secret key and the number of charging times for the device to be charged includes: encrypting the target information according to the first secret key and an initial vector. The initial vector is obtained by utilizing the second secret key to encrypt the number of charging times. The device to be charged utilizes the number of charging times, the first secret key and the second secret key to decrypt the encrypted target information to generate the decrypted data.

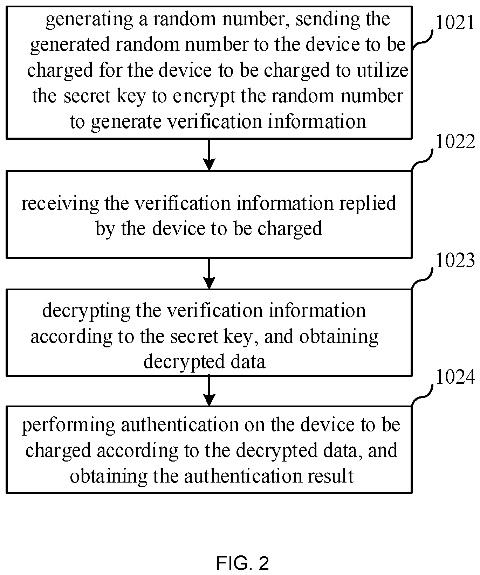

In an embodiment, the power supply device and the device to be charged may have the same secret key, the target information is a random number generated by the power supply device, and the NFC wireless charging method is applied to the power supply device. At step 102, the implementation of the performing authentication on the device to be charged, and obtaining the authentication result may refer to FIG. 2, which includes:
Step 1021: generating a random number, sending the generated random number to the device to be charged for the device to be charged to utilize the secret key to encrypt the random number to generate verification information.
Step 1022: receiving the verification information replied by the device to be charged.
Step 1023: decrypting the verification information according to the secret key, and obtaining decrypted data.
Step 1024: performing authentication on the device to be charged according to the decrypted data, and obtaining the authentication result.

In this embodiment, by generating random numbers, by the means that both parties of authentication encrypt the random numbers and decrypt the verification information obtained by encrypting, the authentication before the NFC wireless charging is completed. The means of generating random numbers and the encryption and decryption related to the random numbers have relatively high security, which is conducive to improving the security of authentication, thereby improving the security of the NFC wireless charging.

At step 1021, the power supply device can adopt a preset algorithm to generate a random number challenge. The preset algorithm can be set according to actual needs, for example, the XorShift algorithm can be selected. However, in this embodiment, the algorithm for generating random numbers is not specifically limited, and in specific implementation, it can be selected according to actual needs. After the power supply device generates a random number challenge, it can send the generated random number challenge to the device to be charged based on the NFC connection established with the device to be charged. After the device to be charged receives the random number challenge, it can encrypt the random number challenge adopting the secret key according to the preset encryption algorithm, and generate verification information. The preset encryption algorithm can be selected according to actual needs. For example, Cipher Block Chaining (CBC for short) in the Advanced Encryption Standard (AES for short) can be selected. However, the encryption algorithm is not specifically limited in this embodiment. After the device to be charged generates the verification information, the verification information can be sent to the power supply device, so that the power supply device can verify the verification information.

At step 1023, the power supply device decrypts the verification information according to the secret key to obtain decrypted data. The secret key adopted by the power supply device to decrypt is the same as the secret key adopted by the device to be charged to encrypt. It can be understood that if the decryption is successful, the decrypted data obtained should be a random number challenge; if the decryption fails, the decrypted data obtained is not the same as the random number challenge.

At step 1024, if the decrypted data is the same as the random number challenge generated by the power supply device, it is determined that the authentication result is authentication passed; if the decrypted data is different from the random number challenge generated by the power supply device, it is determined that the authentication result is authentication failure. In a specific implementation, after the power supply device passes the authentication or fails the authentication, it can reply to the device to be charged a message that the authentication has passed or the authentication has failed.

In an embodiment, the secret key is stored in the power supply device and the device to be charged in advance. That is, the same secret keys in the power supply device and the device to be charged can be written in advance in the power supply device and the device to be charged, which makes it convenient to directly obtain the secret key written in the power supply device or the device to be charged during subsequent encryption or decryption without having to interact with the server.

In an embodiment, the same secret keys in the power supply device and the device to be charged can be the secret keys that both the power supply device and the device to be charged obtain from the server after the power supply device and the device to be charged establish an NFC connection. For example, the secret key is a secret key generated by a negotiation between the power supply device and the device to be charged on a server after the device to be charged sends the NFC wireless charging request. In this embodiment, when the secret key needs to be used, it can be obtained directly from the server, and the power supply device and the device to be charged do not need to store the secret key internally, which is conducive to saving the storage space of the power supply device and the storage space of the device to be charged. Moreover, it is usually more difficult for the server to be attacked, so it is more difficult for the secret key to be stolen, which is conducive to further strengthening the security and reliability of the authentication process.

In an embodiment, the server can store a secret key negotiated between the same power supply device and different devices to be charged, and a secret key negotiated between different power supply devices and the same device to be charged, which can meet the authentication requirements between the same power supply device and different devices to be charged, and the authentication requirements between different power supply devices and the same device to be charged, thereby improving the security and privacy of NFC wireless charging between the same power supply device and different devices to be charged, and improving the security and privacy of NFC wireless charging between different power supply devices and the same device to be charged.

In an embodiment, the secret key is rotated every preset time. The preset time can be set according to actual needs, for example, it can be set to 30 seconds, but this embodiment does not specifically limit this. By updating the secret key every once in a while, it is conducive to increasing the difficulty of cracking the secret key and improving the security and privacy of authentication. Specifically, the secret key rotation mechanism here can be obtained by relying on the Key Derivation Function (KDF for short), there is a Context field in the algorithm, which can be assigned the value of the time when the secret key is generated or the ID of the device to be charged, etc.

In an embodiment, a secret key generation application is installed on both the power supply device and the device to be charged. When the device to be charged initiates an NFC wireless charging request, the device to be charged and the power supply device negotiate on the server to generate the same secret key. The secret key can be rotated in 30 seconds and saved by the secret key generation application in the power supply device and the device to be charged.

In an embodiment, the device to be charged utilizes the secret key and the number of charging times to encrypt the random number to generate verification information. The number of charging times is a number of charging times that the device to be charged is charged by the power supply device. At step 1023, the decrypting the verification information according to the secret key, and obtaining the decrypted data includes: obtaining a number of charging times for the device to be charged, decrypting the verification information according to the number of charging times and the secret key, and obtaining the decrypted data. In this embodiment, when the device to be charged encrypts the random number, it combines the secret key and the number of charging times. When the power supply device decrypts the verification information, it also combines the secret key and the number of charging times. The number of charging times can usually only be accurately obtained by the power supply device and the device to be charged. Therefore, it is conducive to further improving the security of the encryption process and decryption process, thereby improving the security of the authentication process.

In an embodiment, the power supply device and the device to be charged are both provided with counters, a counter in the power supply device is configured to record a number of charging times that the power supply device charges the device to be charged, and a counter in the device to be charged is configured to record a number of charging times that the device to be charged is charged by the power supply device. The obtaining the number of charging times for the device to be charged includes: obtaining the number of charging times for the device to be charged from the counter in the power supply device. When the device to be charged encrypts the random number, the number of charging times of being charged by the power supply device can be obtained from the counter in the device to be charged. It is understandable that the number of charging times for a device to be charged recorded by the power supply device should be the same as the number of charging times of being charged by the power supply device recorded by this device to be charged, that is to say, except for the power supply device and the device to be charged, it is difficult for other devices to obtain the number of charging times recorded separately in the interior of the power supply device and the interior of the device to be charged. The number of charging times is saved separately by the power supply device and the device to be charged, which is conducive to reducing the risk of the number of charging times being stolen, thereby enabling to improve the security of the encryption process and decryption process, thus improving the security of the authentication process.

In an embodiment, after the power supply device completes a charge of the device to be charged, the number of charging times of the power supply device to the device to be charged can be updated on the server. When the power supply device and the device to be charged need to adopt the number of charging times for encryption and decryption, the number of charging times can be obtained from the server, which eliminates the need to set counters in the interior of the power supply device and the interior of the device to be charged to record the number of charging times.

In an embodiment, the secret key includes a first secret key and a second secret key. The device to be charged to utilize the first secret key and an initial vector to encrypt the random number to generate the verification information. The initial vector is obtained by utilizing the second key to encrypt the number of charging times. The decrypting the verification information according to the number of charging times and the secret key, and obtaining the decrypted data includes: decrypting the verification information according to the number of charging times, the first secret key and the second secret key, and obtaining the decrypted data. In this embodiment, two secret keys are included. One secret key is configured to encrypt the random number challenge, and the other secret key is configured to encrypt the number of charging times to obtain the initial vector IV, which is conducive to further improving the security of the encryption process and decryption process, thereby improving the security of the authentication process.

The device to be charged can adopt the AES-CBC algorithm to encrypt random numbers to generate verification information. The AES-CBC algorithm requires the use of the first secret key and the initial vector IV. The way to obtain the initial vector IV can be: obtaining by adopting the second secret key to encrypt the number of charging times. However, in the specific implementation, the method of obtaining the initial vector IV is not limited to this, for example, the unencrypted number of charging times can be directly used as the initial vector IV.

In an embodiment, before the performing authentication on the device to be charged, and obtaining the authentication result, the method further includes: setting the device to be charged as a trusted device; and sending the secret key and the number of charging times for the device to be charged to the trusted device. In this embodiment, the device to be charged does not need to store a secret key or set a counter to record the number of charging times. When the power supply device sets the device to be charged as a trusted device, the power supply device directly sends the secret key and number of charging times to the device to be charged, so that the device to be charged can subsequently encrypt the random number according to the secret key and the number of charging times to generate verification information.

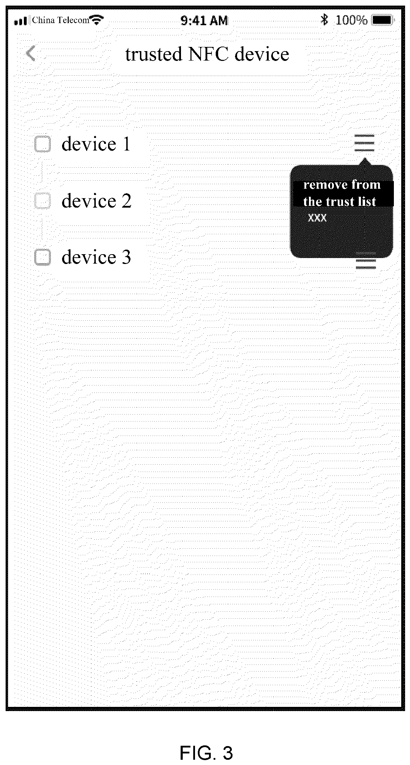

For example, the power supply device is close to the device to be charged to obtain the User Identification (UID), device information and so on of the device to be charged, thereby performing the trust setting for the device to be charged according to the UID and device information of the device to be charged. Referring to FIG. 3, which is a schematic view of a display interface of a power supply device for performing trust settings on a device to be charged. In FIG. 3, the trusted device is a trusted NFC device. It can be seen that the power supply device adds device 1, device 2, and device 3 to the trust list. That is, device 1, device 2, and device 3 are all trusted devices of the power supply device. In a specific implementation, according to actual needs, the trusted device can also be removed from the trust list to cancel trust in the device. The power supply device can send the secret key and number of charging times to the device to be charged as a trusted device by NFC in-site communication, so that the trusted device to be charged can directly encrypt the random number according to the received secret key and the number of charging times.

In an embodiment, in response to that the device to be charged is a Bluetooth device, for example, the Bluetooth device may be a Bluetooth headset, at step 102, the performing authentication on the device to be charged, and obtaining the authentication result includes: obtaining a Bluetooth address of the device to be charged; comparing the Bluetooth address of the device to be charged with a Bluetooth address of a target device, and determining whether the device to be charged is the target device. The target device is a Bluetooth device whose electric quantity detected by the power supply device is lower than a preset threshold; and in response to that the device to be charged is the target device, determining that the authentication result of the device to be charged is authentication passed. The preset threshold value can be set according to actual needs, aiming to indicate that the electric quantity of the target device is low. In this embodiment, by comparing the Bluetooth addresses, it is conducive to automatically starting charging the device to be charged in the situation that the electric quantity of the device to be charged is low.

For example, the power supply device is a mobile phone and the device to be charged is a Bluetooth headset. When the mobile phone determines that the electric quantity of the Bluetooth headset being used by the user is lower than the preset threshold, a prompt message is displayed on the screen to prompt the user whether the NFC charging function needs to be turned on. The prompt message can be "The NFC charging function is about to be turned on. Please place the Bluetooth device at the NFC antenna position of the mobile phone. If it passes, please click to confirm. If you don't need it, please click to cancel." If it is detected that the user clicks to confirm, the mobile phone can monitor the NFC wireless charging request sent by the Bluetooth headset. After receiving the NFC wireless charging request sent by the Bluetooth headset, the mobile phone can obtain the Bluetooth address of the Bluetooth headset, and compare the obtained Bluetooth address with the Bluetooth address of the Bluetooth headset whose power electric quantity is lower than the preset threshold to check if they are equal. If they are equal, it means that the device to be charged that sends the NFC wireless charging request is the Bluetooth headset whose electric quantity is lower than the preset threshold value, thereby determining that the authentication of the Bluetooth headset is passed.

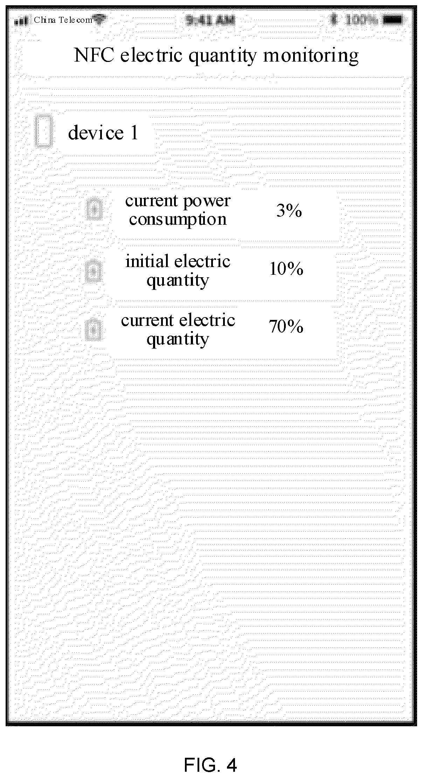

In an embodiment, at step 103, after converting the electric quantity of the power supply device into the electric quantity of the device to be charged, so as to charge the device to be charged, the method further includes: monitoring a power consumption of the power supply device and a charging quantity of the device to be charged, and displaying the power consumption and the charging capacity. In this embodiment, by displaying the power consumption of the power supply device and the charging quantity of the device to be charged, it is convenient for the user to check at any time. For example, a schematic view of a display interface of a power consumption and a charging quantity can be referred to FIG. 4. In FIG. 4, device 1 is the device to be charged that is being charged. The current power consumption in FIG. 4 can be understood as the power consumption of the power supply device. The different value between the current electric quantity and the initial electric quantity can be understood as the charging quantity of the device to be charged.

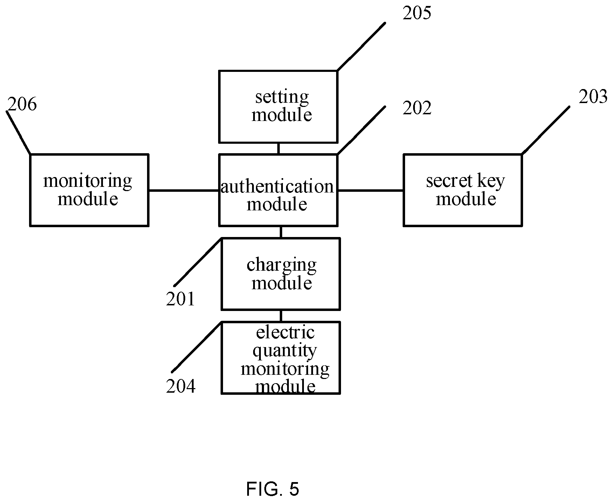

In an embodiment, a module schematic view of a power supply device can be referred to FIG. 5, which includes: a charging module 201, an authentication module 202, a secret key module 203, an electric quantity monitoring module 204, a setting module 205, and a monitoring module 206.

The charging module 201 is configured to convert the electric quantity of the device, that is, the power supply device, into the electric quantity of the opposite device, that is, the device to be charged. The principle is to utilize the antenna to form a magnetic field, thereby generating electrical energy at the opposite device.

The authentication module 202 is configured to authenticate the opposite device, that is, to authenticate the device to be charged, and obtain the authentication result, so as to ensure that the power supply behavior is performed under the conditions approved by the user. Authentication methods include utilizing the algorithm to decrypt and compare data, etc.

The secret key module 203 is configured to generate and save the relevant secret key. This secret key requires the power supply device and the device to be charged to be synchronized. Specifically, after receiving the WLC_CAP instruction, the power supply device starts the authentication process, generates a random number challenge, and sends it to the device to be charged. The secret key module 203 can generate two secret keys, one secret key is configured to encrypt the random number challenge, and another secret key is configured to encrypt the number of charging times to obtain the initial vector IV. The device to be charged utilizes the AES-CBC algorithm and the secret key 1 to encrypt the random number challenge. The initial vector IV required by the AES-CBC algorithm can be obtained by encrypting the number of charging times by the Data Encryption Standard (DES for short) algorithm and secret key 2. The first N-1 rounds of the AES-CBC algorithm consist of four different transformations: ByteSub, ShiftRows, MixColumns, and AddRoundKey. The last round contains only three transformations, while the first round is preceded by an initial single transformation (AddRoundKey), which can be considered round 0. In this embodiment, the number of charging times can be saved by the server, or can be saved locally by the power supply device and the device to be charged respectively. In specific implementation, the device to be charged may also include a secret key module.

The electric quantity monitoring module 204 is configured to monitor the power consumption of the power supply device and collect the electric quantity percentage of the opposite device, calculate the conversion efficiency, and simultaneously display relevant information on the screen. The electric quantity monitoring module 204 is mainly responsible for two tasks, one task is to monitor its own power consumption, and the other task is to monitor the electric quantity of the device to be charged. The monitoring of its own power consumption can be obtained by reporting on the framework side. The electric quantity monitoring of the device to be charged can be obtained by relying on the wireless charging monitoring control instruction WLCL_CTL (WLC Listen Control) instruction.

The device to be charged can send WLCL_CTL to the power supply device. The meaning of Byte 3 of WLCL_CTL is BATTERY_LEVEL. The device to be charged can rely on WLCL_CTL to notify the power supply device of its current electric quantity percentage.

The setting module 205 is configured to display related devices that need to be trusted and can perform trust settings on them. The trusted device can pass the authentication of the authentication module.

The monitoring module 206 is configured to monitor key information sent by the device to be charged, such as the WLC_CAP message of the NFC wireless charging request, etc. Specifically, the key information here includes but is not limited to wireless charging capability information WLC_CAP, wireless charging polling information request WLCP _INFO, wireless charging monitoring control instruction WLCL_CTL, etc.

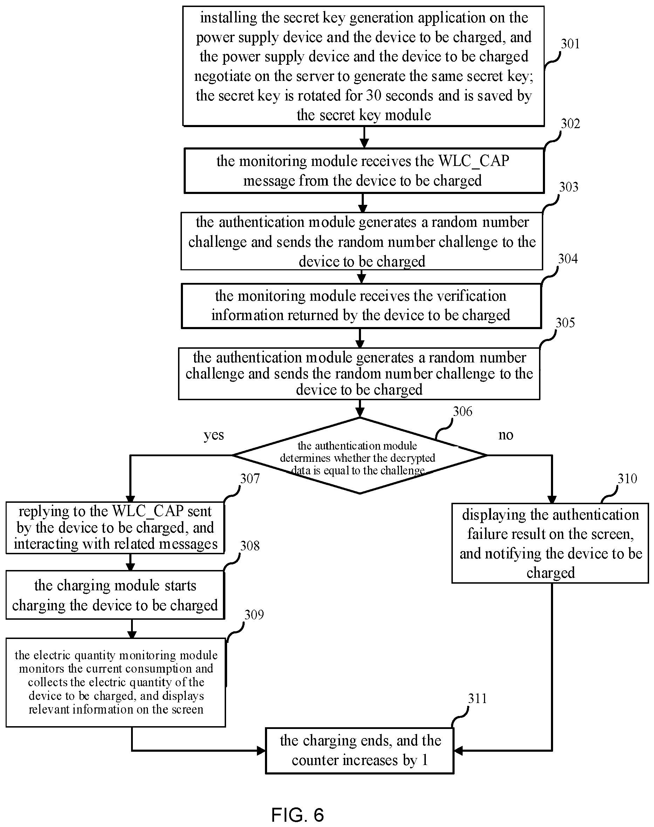

In an embodiment, the schematic flow chart of an NFC wireless charging method can be referred to FIG. 6, including:
Step 301: installing the secret key generation application on the power supply device and the device to be charged, and the power supply device and the device to be charged negotiate on the server to generate the same secret key. The secret key is rotated for 30 seconds and is saved by the secret key module.
Step 302: the monitoring module receives the WLC_CAP message from the device to be charged.

The WLC_CAP message is provided by the device to be charged after the NFC connection is established, which represents that the device to be charged has the ability to receive NFC wireless charging. After that, the authentication process can be carried out.

Step 303: the authentication module generates a random number challenge and sends the random number challenge to the device to be charged.

Step 304: the monitoring module receives the verification information returned by the device to be charged.

After the device to be charged receives the challenge, it utilizes the secret key and the number of charging times to symmetrically encrypt the challenge (such as adopting the AES-CBC algorithm) to obtain. The secret key adopted for encryption is consistent with the secret key stored in the secret key module of the power supply device.

Step 305: the authentication module decrypts the verification information according to the number of charging times recorded by the built-in counter and the secret key, and checks the decrypted data.

Step 306: the authentication module determines whether the decrypted data is equal to the challenge; if the decrypted data is equal to the challenge, step 307 is executed, otherwise step 310 is executed.

Step 307: replying to the WLC_CAP sent by the device to be charged, and interacting with related messages.

Step 308: the charging module starts charging the device to be charged.

Step 309: the electric quantity monitoring module monitors the current consumption and collects the electric quantity of the device to be charged, and displays relevant information on the screen.

The charging efficiency can be further calculated if the device to be charged supports it.

Step 310: displaying the authentication failure result on the screen, and notifying the device to be charged.

Step 311: the charging ends, and the counter increases by 1.

The counter is incremented by 1, that is, the number of charging times for the device to be charged by the power supply device is incremented by 1.

In this embodiment, when the secret key needs to be used, it can be obtained directly from the server. The power supply device and the device to be charged do not need to store the secret key internally, which is conducive to saving the storage space of the power supply device and the storage space of the device to be charged. Moreover, it is usually more difficult for the server to be attacked, so it is more difficult for the secret key to be stolen, which is conducive to further strengthening the security and reliability of the authentication process.

By updating the secret key every once in a while, it is conducive to increasing the difficulty of cracking the secret key, improving the security and privacy of authentication, thereby improving the security and privacy of NFC wireless charging.

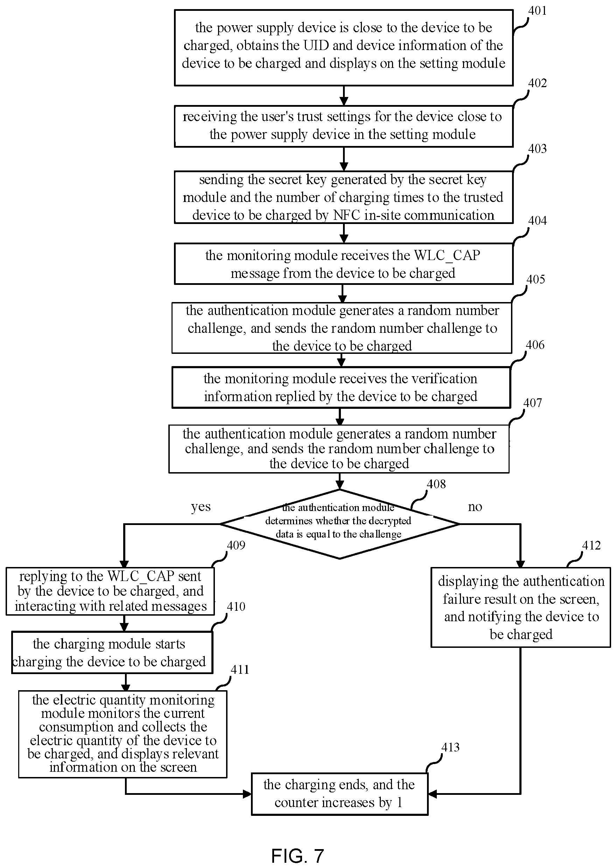

In an embodiment, a schematic flow chart of another NFC wireless charging method can be referred to FIG. 7, including:
Step 401: the power supply device is close to the device to be charged, obtains the UID and device information of the device to be charged and displays on the setting module.
Step 402: receiving the user's trust settings for the device close to the power supply device in the setting module.
Step 403: sending the secret key generated by the secret key module and the number of charging times to the trusted device to be charged by NFC in-site communication.
Step 404: the monitoring module receives the WLC_CAP message from the device to be charged.
Step 405: the authentication module generates a random number challenge, and sends the random number challenge to the device to be charged.
Step 406: the monitoring module receives the verification information replied by the device to be charged.
Step 407: the authentication module decrypts the verification information according to the number of charging times recorded by the built-in counter and the secret key, and checks the decrypted data.
Step 408: the authentication module determines whether the decrypted data is equal to the challenge; if the decrypted data is equal to the challenge, step 409 is executed, otherwise step 413 is executed.
Step 409: replying to the WLC_CAP sent by the device to be charged, and interacting with related messages.
Step 410: the charging module starts charging the device to be charged. Step 411: the electric quantity monitoring module monitors the current consumption and collects the electric quantity of the device to be charged, and displays relevant information on the screen.
Step 412: displaying the authentication failure result on the screen, and notifying the device to be charged.
Step 413: the charging ends, and the counter increases by 1.

In this embodiment, while improving the security and privacy of NFC wireless charging, there is no need to rely on a server, the authentication process can be completed by interaction between the device to be charged and the power supply device. In the device to be charged, there is no need to store a secret key or set a counter to record the number of charging times. When the power supply device sets the device to be charged as a trusted device, the power supply device directly sends the secret key and the number of charging times to the device to be charged, so that the device to be charged can subsequently encrypt the random number according to the secret key and the number of charging times to generate verification information.

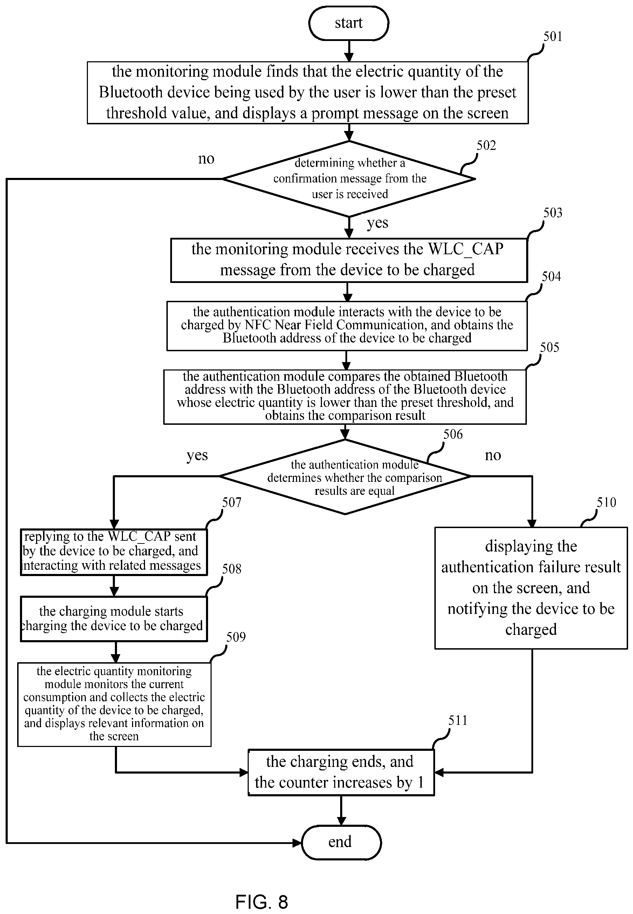

In an embodiment, a schematic flow chart of an NFC wireless charging method can be referred to FIG. 8, including:
Step 501: the monitoring module finds that the electric quantity of the Bluetooth device being used by the user is lower than the preset threshold value, and displays a prompt message on the screen.

The prompt information can be "The NFC charging function is about to be turned on. Please place the device at the NFC antenna position of the mobile phone. If it passes, please click to confirm. If you don't need it, please click to cancel."

Step 502: determining whether a confirmation message from the user is received; if the confirmation message from the user is received, executing step 503, otherwise the process ends.

Step 503: the monitoring module receives the WLC_CAP message from the device to be charged.

Step 504: the authentication module interacts with the device to be charged by NFC, and obtains the Bluetooth address of the device to be charged.

Step 505: the authentication module compares the obtained Bluetooth address with the Bluetooth address of the Bluetooth device whose power electric quantity is lower than the preset threshold, and obtains the comparison result.

Step 506: the authentication module determines whether the comparison results are equal; if the comparison results are equal, executing step 508, otherwise executing step 508.

Step 507: replying to the WLC_CAP sent by the device to be charged, and interacting with related messages.

Step 508: the charging module starts charging the device to be charged.

Step 509: the electric quantity monitoring module monitors the current consumption and collects the electric quantity of the device to be charged, and displays relevant information on the screen.

Step 510: displaying the authentication failure result on the screen, and notifying the device to be charged.

Step 511: the charging ends, and the counter increases by 1.

In this embodiment, by comparing the Bluetooth addresses, it is conducive to automatically triggering the process of starting charging of the device to be charged in the situation that the electric quantity of the device to be charged is low, thus improving the user experience while enabling to improve the security and privacy of NFC wireless charging.

It should be noted that the above-mentioned examples in the embodiments of the present disclosure are illustrations for the convenience of understanding and do not limit the technical solutions of the present disclosure.

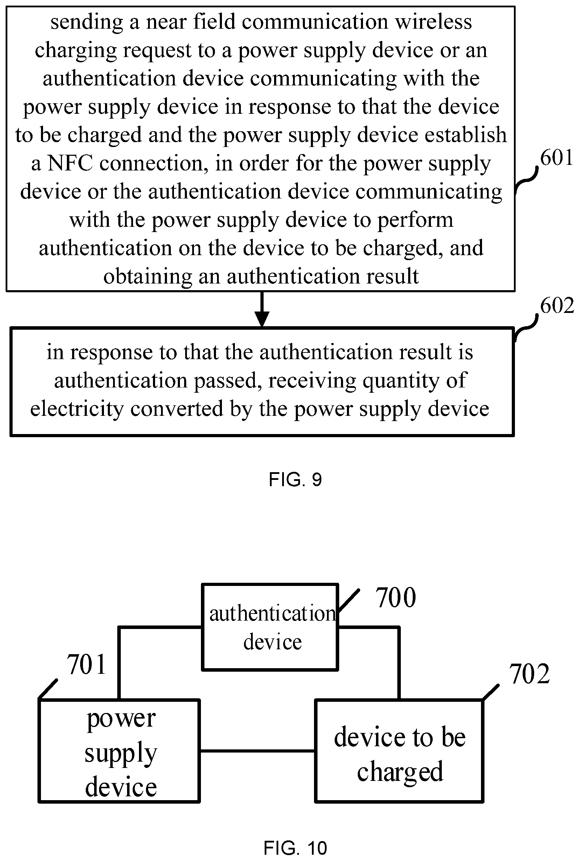

An embodiment of the present disclosure further provides an NFC wireless charging method, which is applied to the device to be charged. A flow chart of an NFC wireless charging method applied to a device to be charged can be referred to FIG. 9, including:
Step 601: sending a near field communication wireless charging request to a power supply device or an authentication device communicating with the power supply device after the device to be charged and the power supply device establish an NFC connection for the power supply device or the authentication device communicating with the power supply device to perform authentication on the device to be charged, and obtaining an authentication result.
Step 602: in response to that the authentication result is authentication passed, receiving electric quantity converted by the power supply device. The power supply device converts electric quantity of the power supply device into electric quantity of the device to be charged, so as to charge the device to be charged.

Since this embodiment corresponds to the above-mentioned embodiment of the NFC wireless charging method applied to the power supply device or the authentication device communicating with the power supply device, the embodiments can be implemented in conjunction with the above embodiments of the NFC wireless charging method applied to the power supply device or the authentication device communicating with the power supply device. The relevant technical details according to the above embodiment of the NFC wireless charging method applied to the power supply device or the authentication device communicating with the power supply device are still valid in this embodiment. The technical effects that can be achieved in the above embodiments of the NFC wireless charging method applied to the power supply device or the authentication device communicating with the power supply device can also be achieved in this embodiment. In order to reduce duplication, it will not go into details here. Correspondingly, the relevant technical details according to this embodiment can also be applied to the above embodiments of the NFC wireless charging method applied to the power supply device or the authentication device communicating with the power supply device.

The steps of the various methods above are divided just for the purpose of clear description. During implementation, they can be combined into one step or perform splitting of some steps into multiple steps. As long as the same logical relationship is included, it is within the scope of the present disclosure. Adding insignificant modifications or introducing insignificant designs to its algorithms and process, but not changing the core design of its algorithms and process, are within the scope of the present disclosure.

The embodiment of the present disclosure further provides an NFC wireless charging system, referring to FIG. 10, including: an authentication device 700, a power supply device 701, a device to be charged 702. The authentication device 700 can be a server, and the server communicates with the power supply device 701.

The device to be charged 702 is configured for sending an NFC wireless charging request to the authentication device 700 after establishing an NFC connection with the power supply device 701. The authentication device 700 is configured for performing authentication on the device to be charged 702 after receiving the NFC wireless charging request, and obtaining an authentication result; in response to that the authentication result is authentication passed, converting electric quantity of the power supply device 701 into electric quantity of the device to be charged 702, so as to charge the device to be charged 702.

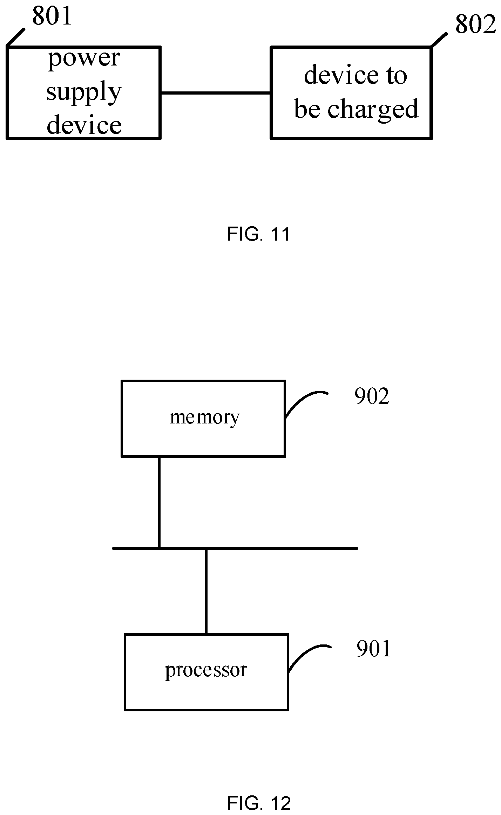

In an embodiment, a schematic view of an NFC wireless charging system can be referred to FIG. 11, which includes a power supply device 801 and a device to be charged 802. The device to be charged 802 is configured for sending an NFC wireless charging request to the power supply device 801 after establishing an NFC connection with the power supply device 801. The power supply device 801 is configured for performing authentication on the device to be charged 802 after receiving the NFC wireless charging request, and obtaining an authentication result; in response to that the authentication result is authentication passed, converting electric quantity of the power supply device 801 into electric quantity of the device to be charged 802, so as to charge the device to be charged 802.

It is not difficult to find that the embodiment is a system embodiment corresponding to the above-mentioned embodiment of the NFC wireless charging method, and this embodiment can be implemented in cooperation with the above embodiments of the NFC wireless charging method. The relevant technical details and technical effects according to the above embodiments of the NFC wireless charging method are still valid in this embodiment, and will not be described again in order to reduce duplication. Correspondingly, the relevant technical details according to this embodiment can also be applied to the above embodiments of the NFC wireless charging method.

An embodiment of the present disclosure further provides an electronic device, as shown in FIG. 12, including: at least one processor 901, and a memory 902 communicated with the at least one processor 901. The memory 902 stores an instruction executable by the at least one processor 901, and the instruction is executed by the at least one processor 901. In response to that the electronic device is an authentication device, the at least one processor 901 executes the NFC wireless charging method applied to the authentication device in the above method embodiment. In response to that the electronic device is a device to be charged, the at least one processor executes the NFC wireless charging method applied to the device to be charged in the above method embodiment.

The memory 902 and the processor 901 are connected by adopting bus mode. The bus can include any number of interconnected buses and bridges. The bus connects various circuits of one or more processors 901 and memories 902 together. The bus further connects together various other circuits such as peripherals, voltage regulators, and power management circuits, which are all well known in the art and therefore will not be further described herein. The bus interface provides the interface between the bus and the transceiver. A transceiver may be one element or may be multiple elements, such as multiple receivers and transmitters, providing a unit for communicating with various other devices over a transmission medium. The data processed by the processor 901 is transmitted on the wireless medium by the antenna. Furthermore, the antenna further receives the data and transmits the data to the processor 901.

The processor 901 is responsible for managing the bus and general processing, and further can provide a variety of functions, including timing, peripheral interfaces, voltage regulation, power management, and other control functions. Memory 902 can be configured to store data used by the processor 901 when performing operations.

An embodiment of the present disclosure further provides a computer-readable storage medium, which stores a computer program. When the computer program is executed by a processor, the above method embodiments are implemented.

That is, those skilled in the art can understand that all steps or part of the steps in implementing the methods of the above embodiments can be completed by instructing relevant hardware by a program. The program is stored in a storage medium and includes several instructions to cause equipment (which can be a microcontroller, a chip, etc.) or a processor to execute all steps or part of the steps of the methods described in various embodiments of the present disclosure. The aforementioned storage media include: U disk, mobile hard disk, Read-Only Memory (ROM for short), Random Access Memory (RAM for short), magnetic disk or optical disk and other media that can store program code.

Those of skilled in the art can understand that the above-mentioned embodiments are specific examples for implementing the present disclosure. In practical applications, various changes can be made in form and details without departing from the scope of the present disclosure.

## Claims

1. A near field communication (NFC) wireless charging method, applied to a power supply device or an authentication device communicating with the power supply device, **characterized by** comprising:
receiving an NFC wireless charging request sent by a device to be charged in response to that the power supply device establishes an NFC connection with the device to be charged;
performing authentication on the device to be charged, and obtaining an authentication result; and
in response to that the authentication result is authentication passed, converting electric quantity of the power supply device into electric quantity of the device to be charged, so as to charge the device to be charged.

2. The NFC wireless charging method according to claim 1, wherein the performing authentication on the device to be charged, and obtaining the authentication result comprises:
sending target information to the device to be charged for the device to be charged to encrypt the target information to generate verification information;
receiving the verification information replied by the device to be charged, and decrypting the verification information, and obtaining decrypted data; and
performing authentication on the device to be charged according to the decrypted data, and obtaining the authentication result.

3. The NFC wireless charging method according to claim 1, wherein the performing authentication on the device to be charged, and obtaining the authentication result comprises:
encrypting target information, and sending encrypted target information to the device to be charged for the device to be charged to decrypt the encrypted target information to generate decrypted data;
receiving the decrypted data replied by the device to be charged; and
performing authentication on the device to be charged according to the decrypted data, and obtaining the authentication result.

4. The NFC wireless charging method according to claim 2, wherein the sending the target information to the device to be charged for the device to be charged to encrypt the target information to generate the verification information comprises:
sending the target information to the device to be charged for the device to be charged to utilize a secret key to encrypt the target information to generate the verification information;
the decrypting the verification information, and obtaining the decrypted data comprises:
decrypting the verification information according to the secret key, and obtaining the decrypted data.

5. The NFC wireless charging method according to claim 4, wherein the sending the target information to the device to be charged for the device to be charged to utilize the secret key to encrypt the target information to generate the verification information comprises:
sending the target information to the device to be charged for the device to be charged to utilize the secret key and a number of charging times to encrypt the target information to generate the verification information;
wherein the number of charging times is a number of charging times that the device to be charged is charged by the power supply device;
the decrypting the verification information according to the secret key, and obtaining the decrypted data comprises:
obtaining a number of charging times for the device to be charged, decrypting the verification information according to the number of charging times and the secret key, and obtaining the decrypted data.

6. The NFC wireless charging method according to claim 5, wherein the secret key comprises a first secret key and a second secret key;
the sending the target information to the device to be charged for the device to be charged to utilize the secret key and the number of charging times to encrypt the target information to generate the verification information comprises:
sending the target information to the device to be charged for the device to be charged to utilize the first secret key and an initial vector to encrypt the target information to generate the verification information; wherein the initial vector is obtained by utilizing the second key to encrypt the number of charging times;
the decrypting the verification information according to the number of charging times and the secret key, and obtaining the decrypted data comprises:
decrypting the verification information according to the number of charging times, the first secret key and the second secret key, and obtaining the decrypted data.

7. The NFC wireless charging method according to claim 3, wherein the encrypting the target information comprises:
encrypting the target information according to a secret key; wherein the device to be charged utilizes the secret key to decrypt the encrypted target information to generate the decrypted data.

8. The NFC wireless charging method according to claim 7, wherein the encrypting the target information according to the secret key comprises:
encrypting the target information according to the secret key and a number of charging times for the device to be charged; wherein the device to be charged utilizes the secret key and the number of charging times to decrypt the encrypted target information to generate the decrypted data.

9. The NFC wireless charging method according to claim 8, wherein the secret key comprises a first secret key and a second secret key;
the encrypting the target information according to the secret key and the number of charging times for the device to be charged comprises:
encrypting the target information according to the first secret key and an initial vector; wherein the initial vector is obtained by utilizing the second secret key to encrypt the number of charging times, and the device to be charged utilizes the number of charging times, the first secret key and the second secret key to decrypt the encrypted target information to generate the decrypted data.

10. The NFC wireless charging method according to any one of claims 4 to 9, wherein the secret key is stored in the power supply device and the device to be charged in advance; or
the secret key is a secret key generated by a negotiation between the power supply device and the device to be charged on a server in response to that the device to be charged sends the NFC wireless charging request.

11. The NFC wireless charging method according to claim 5 or 8, wherein the power supply device and the device to be charged are both provided with counters, a counter in the power supply device is configured to record a number of charging times that the power supply device charges the device to be charged, and a counter in the device to be charged is configured to record a number of charging times that the device to be charged is charged by the power supply device; the obtaining the number of charging times for the device to be charged comprises:
obtaining the number of charging times for the device to be charged from the counter in the power supply device.

12. The NFC wireless charging method according to claim 5 or 8, wherein before the performing authentication on the device to be charged, and obtaining the authentication result, the method further comprises:
setting the device to be charged as a trusted device; and
sending the secret key and the number of charging times for the device to be charged to the trusted device.

13. The NFC wireless charging method according to claim 1, wherein in response to that the device to be charged is a Bluetooth device, and the performing authentication on the device to be charged, and obtaining the authentication result comprises:
obtaining a Bluetooth address of the device to be charged;
comparing the Bluetooth address of the device to be charged with a Bluetooth address of a target device, and determining whether the device to be charged is the target device; wherein the target device is a Bluetooth device whose electric quantity detected by the power supply device is lower than a preset threshold; and
in response to that the device to be charged is the target device, determining that the authentication result of the device to be charged is authentication passed.

14. The NFC wireless charging method according to any one of claims 1 to 9, wherein in response to that converting the electric quantity of the power supply device into the electric quantity of the device to be charged, so as to charge the device to be charged, the method further comprises:
monitoring a power consumption of the power supply device and a charging quantity of the device to be charged, and displaying the power consumption and the charging capacity.

15. A near field communication (NFC) wireless charging method, applied to a device to be charged, **characterized by** comprising:
sending an NFC wireless charging request to a power supply device or an authentication device communicating with the power supply device in response to that the device to be charged and the power supply device establish an NFC connection for the power supply device or the authentication device communicating with the power supply device to perform authentication on the device to be charged, and obtaining an authentication result; and
in response to that the authentication result is authentication passed, receiving electric quantity converted by the power supply device; wherein the power supply device converts electric quantity of the power supply device into electric quantity of the device to be charged, so as to charge the device to be charged.

16. A near field communication (NFC) wireless charging system, **characterized by** comprising: a power supply device and a device to be charged;
the device to be charged is configured for sending an NFC wireless charging request to the power supply device in response to establishing an NFC connection with the power supply device; and
the power supply device is configured for performing authentication on the device to be charged in response to receiving the NFC wireless charging request, and obtaining an authentication result; in response to that the authentication result is authentication passed, converting electric quantity of the power supply device into electric quantity of the device to be charged, so as to charge the device to be charged.

17. A near field communication (NFC) wireless charging system, **characterized by** comprising: a power supply device, a device to be charged, and an authentication device communicating with the power supply device;
the device to be charged is configured for sending an NFC wireless charging request to the authentication device in response to establishing an NFC connection with the power supply device; and
the authentication device is configured for performing authentication on the device to be charged in response to receiving the NFC wireless charging request, and obtaining an authentication result; in response to that the authentication result is authentication passed, converting electric quantity of the power supply device into electric quantity of the device to be charged, so as to charge the device to be charged.

18. An electronic device, **characterized by** comprising:
at least one processor; and
a memory communicated with the at least one processor;
wherein the memory stores an instruction executable by the at least one processor, and the instruction is executed by the at least one processor;
in response to that the electronic device is an authentication device, the at least one processor executes the NFC wireless charging method according to any one of claims 1 to 14; and
in response to that the electronic device is a device to be charged, the at least one processor executes the NFC wireless charging method according to claim 15.

19. A computer-readable storage medium, storing a computer program, **characterized in that** when the computer program is executed by a processor, the NFC wireless charging method according to any one of claims 1 to 14 is implemented, or the NFC wireless charging method according to claim 15 is implemented.
